# EUROPEAN PATENT APPLICATION

(11) **EP 4 067 808 A1**
(43) Date of publication of application: **05.10.2022**
(21) Application number: 19954476.8
(22) Date of filing: 26.11.2019
(51) Int. Cl.: G01B 5/016

(54) **MEASUREMENT TOOL HAVING TIP PART MADE FROM POLYCRYSTALLINE DIAMOND**

(71) Applicant: SUMITOMO ELECTRIC INDUSTRIES, LTD., Osaka-shi, Osaka 541-0041 (JP)
(72) Inventor: SAKANO, Fumihide, Osaka-shi, Osaka 541-0041 (JP); HARADA, Masashi, Osaka-shi, Osaka 541-0041 (JP); KOBAYASHI, Yutaka, Osaka-shi, Osaka 541-0041 (JP)
(74) Representative: Boult Wade Tennant LLP
(86) International application number: PCT/JP2019/046165
(87) International publication number: WO 2021/106075

(57) **Abstract**

A measurement tool having a tip part consisting of polycrystalline diamond, in which the polycrystalline diamond contains at least one of dispersed nitrogen, boron, and phosphorus, the tool includes a shank part, and the tip part is provided at an end portion of the shank part.

## Description

### TECHNICAL FIELD

The present disclosure relates to a measurement tool having a tip part consisting of polycrystalline diamond.

### BACKGROUND ART

The use of diamond as a material for tools such as styluses that are worn by use is known, which is disclosed in, for example, PTL 1 (Japanese Patent Laying-Open No. 2016-223938), PTL 2 (Japanese Patent Laying-Open No. 2013-200211), and PTL 3 (Japanese Patent Laying-Open No. 2014-9999).

### CITATION LIST

### PATENT LITERATURE

PTL 1: Japanese Patent Laying-Open No. 2016-223938
PTL 2: Japanese Patent Laying-Open No. 2013-200211
PTL 3: Japanese Patent Laying-Open No. 2014-9999

### SUMMARY OF INVENTION

An aspect of the present disclosure
is a measurement tool having a tip part consisting of polycrystalline diamond,
in which the polycrystalline diamond contains at least one of nitrogen, boron, and phosphorus dispersed at an atomic level,
the tool further includes a shank part, and the tip part is provided at an end portion of the shank part.

### BRIEF DESCRIPTION OF DRAWINGS

FIG. 1 is a schematic view showing a measurement tool (stylus) having a tip part consisting of polycrystalline diamond according to an embodiment.
FIG. 2 is a schematic view showing a modification example of the stylus of the embodiment.
FIG. 3 is a schematic view showing another modification example of the stylus of the embodiment.
FIG. 4 is a schematic view showing still another modification example of the stylus of the embodiment.
FIG. 5 is a schematic view showing far still another modification example of the stylus of the embodiment.

### DETAILED DESCRIPTION

### [Problem to be Solved by the Present Disclosure]

An object of the present disclosure is to provide a measurement tool having a tip part consisting of polycrystalline diamond capable of improving accuracy (measurement accuracy, processing accuracy, or the like) in use for measurement, processing, or the like.

### [Advantageous Effect of the Present Disclosure]

According to the present disclosure, it is possible to provide a measurement tool having a tip part consisting of polycrystalline diamond capable of improving accuracy in use for measurement.

### [Description of Embodiment]

First, the overview of an embodiment of the present disclosure will be listed and described.
[1] A measurement tool according to an aspect of the present disclosure
   is a measurement tool having a tip part consisting of polycrystalline diamond,
   in which the polycrystalline diamond contains at least one of dispersed nitrogen, boron, and phosphorus,
   the tool further includes a shank part, and the tip part is provided at an end portion of the shank part.

   This suppresses wear of the tip part after use. Therefore, the durability of the tool improves, the service life can be extended, and measurement accuracy or the like improves.
[2] The measurement tool according to the aspect of the present disclosure,
   in which the polycrystalline diamond has an average crystal grain size of 10 to 1000 nm.
   This increases the grain boundary area of one grain with adjacent grains, and thus the drop of grains by friction in use for measurement is suppressed. Therefore, the durability of the tool improves, the service life can be extended, and measurement accuracy or the like improves.
[3] A Knoop hardness of the polycrystalline diamond is 50 GPa or more. This makes it possible to preferably use the measurement tool as a tool that is used for measurement such as a stylus.

### [Detail of embodiment]

Hereinafter, the embodiment of the present disclosure will be described, but the present disclosure is not limited thereto.

Here, an expression in the form of "A to B" in the present specification means the upper limit and lower limit of a range (that is, A or more and B or less), and, in a case where a unit is not put after A but after B only, the unit of A and the unit of B are the same.

### <Measurement tool>

Examples of a tool that is used for measurement include a stylus.

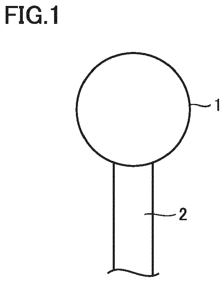

With reference to FIG. 1, a measurement tool according to the present embodiment has a tip part 1 consisting of polycrystalline diamond. FIG. 1 shows an example of a stylus including a columnar shank part 2 and tip part 1 provided at an end portion of columnar shank part 2 as one form of the measurement tool according to the present embodiment.

### (Polycrystalline diamond)

"Polycrystalline diamond" refers to a polycrystalline body in which the crystal grains of diamond in irregular orientations are strongly bound to one another in irregular orientations without a metal binding agent, but also includes a polycrystalline body in which some of carbon atoms in the diamond crystal structure are substituted into atoms other than carbon atoms (nitrogen, boron, phosphorus, or the like) or a polycrystalline body in which an atom other than a carbon atom is inserted between carbon and carbon.

Examples of the polycrystalline diamond include polycrystalline diamond containing no binder (binder-less polycrystalline diamond), nano-polycrystalline diamond, and nano-polycrystalline diamond containing no binder (binder-less nano-polycrystalline diamond).

As the polycrystalline diamond, it is possible to use, for example, a dissimilar element-doped nano-polycrystalline diamond. Hereinafter, the dissimilar element-doped nano-polycrystalline diamond will be described in detail.

The dissimilar element-doped nano-polycrystalline diamond contains a dissimilar element dispersed in carbon that configures the main body of the polycrystalline diamond. Here, in the present specification, "dissimilar element" refers to an element that can be doped to diamond, is other than carbon that configures diamond, and is not an inevitable impurity that is contained in the diamond. Examples of the dissimilar element include nitrogen, hydrogen, Group III elements, Group V elements, silicon, metals such as transition metal, and rare earths. A single dissimilar element may be doped to diamond or a plurality of dissimilar elements may be doped to diamond at the same time.

The nano-polycrystalline diamond is formed on a base material described below and contains the dissimilar element uniformly dispersed at an atomic level. In the present specification, "being dispersed at an atomic level" refers to a dispersion state in which, for example, when solid carbon is produced by mixing and solidifying carbon and the dissimilar element in a gas-phase state in a vacuum atmosphere, the dissimilar element is at a dispersion level in the solid carbon. That is, this state is a state in which an element that is isolated and precipitated or a compound other than diamond is not formed.

The nano-polycrystalline diamond can be produced by performing a heat treatment on graphite formed on the base material. Graphite is a single solid body and includes a crystallized portion. In the case of producing the nano-polycrystalline diamond by performing a heat treatment on graphite formed on the base material, the nano-polycrystalline diamond and the graphite basically have the same shape.

The dissimilar element can be doped to the graphite in the graphite-forming stage. Specifically, it is possible to thermally decompose a gas mixture of a gas containing the dissimilar element and a hydrocarbon gas at a temperature of 1500°C or more to form graphite on the base material and dope the dissimilar element to the graphite at the same time. When the dissimilar element is mixed into a raw material gas for forming graphite in a gas-phase state and the dissimilar element is doped to the graphite as described above, it is possible to uniformly dope the dissimilar element to the graphite at an atomic level. In addition, the dissimilar element a desired amount of the dissimilar element can be uniformly doped at an atomic level by appropriately adjusting the amount of the gas containing the dissimilar element doped to the hydrocarbon gas.

The gas mixture can be thermally decomposed in a vacuum chamber, and, at this time, when the degree of vacuum in the vacuum chamber is set to be relatively high, it is possible to suppress impurities included by accident in the graphite. However, in actual cases, unintended inevitable impurities are included in graphite by accident. Examples of these inevitable impurities include nitrogen, hydrogen, oxygen, boron, silicon, and transition metal that are elements other than the dissimilar element.

By decreasing the amount of the impurities in the graphite to the detection limit level of SIMS analysis or ICP analysis as described above, when diamond is produced using the graphite, can be produced diamond containing an extremely small amount of impurities other than the dissimilar element that is intentionally doped.

The nano-polycrystalline diamond of the present embodiment uniformly contains the dissimilar element as described above, and the amount of impurities other than the dissimilar element is also extremely small. In the nano-polycrystalline diamond, the atoms of the dissimilar element do not agglomerate in a cluster shape in carbon and are in a state almost uniformly dispersed throughout the entire diamond. Ideally, the atoms of the dissimilar element are present in a mutually isolated state in the carbon.

As described above, as the nano-polycrystalline diamond of the present embodiment, nano-polycrystalline diamond in which the dissimilar element is uniformly doped to carbon is obtained. In addition, since it is possible to uniformly disperse the dissimilar element in the nano-polycrystalline diamond at an atomic level, desired characteristics and functions can be effectively imparted to the diamond. For example, the doping of an appropriate element makes it possible to improve the mechanical characteristics of the diamond such as effectively enhancing the wear resistance of the diamond, also makes it possible to improve the electrical characteristics of the diamond such as imparting a conductive property to the diamond and also makes it possible to improve the optical characteristics of the diamond by uniformly coloring the diamond or the like.

As the dissimilar element, for example, nitrogen can be selected. In this case, it is possible to disperse nitrogen in the diamond at an atomic level. That is, it is possible to introduce and isolate nitrogen atoms into the diamond. At this time, the nitrogen atoms are present in carbon (diamond main body) in a state of substituting carbon atoms. That is, the nitrogen atoms get into a state in which the nitrogen atoms and the carbon atoms chemically bond to each other instead of a state in which the nitrogen atoms are simply contained in carbon by accident.

Furthermore, in the nano-polycrystalline diamond of the present embodiment, since the dissimilar element such as nitrogen described above is dispersed in the diamond main body at an atomic level, the generation of a concentration distribution of the dissimilar element in the diamond is difficult. This also makes it possible to effectively suppress the abnormal local growth of the crystal grains of the diamond. As a result, it is also possible to make the sizes of the crystal grains of the diamond uniform compared with those in conventional examples.

The concentration of the dissimilar element in the diamond can be arbitrarily set. The concentration of the dissimilar element can be set to be high or low. In any case, since it is possible to disperse the dissimilar element in the diamond at an atomic level, it is possible to effectively suppress the generation of a concentration distribution of the dissimilar element in the diamond. The concentration of the dissimilar element doped is preferably within a range of approximately 10¹⁴ to 10²² /cm³ in total in order to maintain the crystal grain sizes of the polycrystalline diamond within a range of approximately 10 to 1000 nm.

Next, a method for manufacturing the dissimilar element-doped nano-polycrystalline diamond of the present embodiment will be described.

First, the base material is heated to a temperature of approximately 1500°C or more and 3000°C or less in a vacuum chamber. As a heating method, a well-known method can be adopted. For example, it is conceivable to install a heater capable of directly or indirectly heating the base material to a temperature of 1500°C or more in the vacuum chamber.

As the base material, any metal, inorganic ceramic material, or carbon material can be used as long as the material is capable of withstanding the temperature of approximately 1500°C to 3000°C. However, from the viewpoint of preventing impurities from being included by accident in graphite, which is a raw material, the base material is preferably produced with carbon. More preferably, it is conceivable to form the base material from diamond or graphite containing an extremely small amount of impurities. In this case, at least the surface of the base material needs to be formed of diamond or graphite.

Next, a hydrocarbon gas and a gas containing the dissimilar element are introduced into the vacuum chamber. At this time, the degree of vacuum in the vacuum chamber is set at approximately 20 to 100 Torr. This makes it possible to mix the hydrocarbon gas and the gas containing the dissimilar element in the vacuum chamber and then to form graphite into which the dissimilar element is incorporated at an atomic level on the heated base material. In addition, even in a case where a compound is introduced as a dissimilar element source, an unnecessary component does not remain. It is also allowed to heat the base material after the introduction of the gas mixture and form graphite containing the dissimilar element on the base material.

As the hydrocarbon gas, for example, methane gas can be used. As the gas containing the dissimilar element, the gas of a hydride or organic compound of the dissimilar element is preferably adopted. When a hydride of the dissimilar element is adopted, it is possible to easily decompose the hydride of the dissimilar element at high temperatures. In addition, when an organic compound of the dissimilar element is adopted, it is possible to form a state in which the dissimilar element is surrounded by carbon, that is, a state in which the dissimilar elements are isolated from each other. This makes it easy to incorporate the dissimilar element into graphite in an isolated state.

In a case where nitrogen is selected as the dissimilar element, it is possible to use, for example, a gas of methylamine or an analog thereof. In a case where methane gas and methylamine gas are bubbled with argon gas to produce a gas mixture, it is possible to introduce the gas mixture into the vacuum chamber at a rate of 10⁻⁷% to 100%.

At the time of forming graphite, it is preferable to make the hydrocarbon gas and the gas containing the dissimilar element flow toward the surface of the base material. This makes it possible to efficiently mix the individual gases in the vicinity of the base material and makes it possible to efficiently generate graphite containing the dissimilar element on the base material. The hydrocarbon gas or the dissimilar element-containing gas may be supplied toward the base material from directly above the base material or may be set to be supplied toward the base material in an inclined direction or a horizontal direction. It is also conceivable to install a guide member configured to guide the hydrocarbon gas or the dissimilar element-containing gas to the base material in the vacuum chamber.

Graphite containing the dissimilar element, which is an element other than carbon, dispersed in carbon that is manufactured as described above can be sintered in a high-pressure pressing apparatus, for example, at a pressure of 15 GPa and a temperature of 2300°C, to produce dissimilar element-doped nano-polycrystalline diamond to which the dissimilar element is uniformly doped. That is, after the sintering of the graphite, nano-polycrystalline diamond having nano-sized crystal grains is obtained.

In a step of converting the graphite into diamond, it is preferable to perform a heat treatment on the graphite at a high pressure without adding a sintering aid or a catalyst. In addition, in the step of converting the graphite into diamond, a heat treatment may be performed on the graphite formed on the base material in a high-pressure apparatus.

In the method of the present embodiment, it is also possible to confine an element that is normally difficult to be doped to diamond in diamond crystals in an isolated state by the abrupt generation of the crystals.

The graphite that can be used for the production of the nano-polycrystalline diamond of the present embodiment is, for example, crystalline or polycrystalline partially having a crystallized portion. The density of the graphite is preferably higher than 0.8 g/cm³. This makes it possible to decrease the volume change when the graphite is sintered. Experimentally, the density of the graphite is more preferably set at approximately 1.4 g/cm³ or more and 2.0 g/cm³ or less, from the viewpoint of decreasing the volume change when the graphite is sintered and improving the yield.

The reason for setting the density of the graphite in the above-described range is that, if the density of the graphite is less than 1.4 g/cm³, the volume change in a hightemperature and high-pressure process may be too large, and therefore the temperature control may not work. It is also because, if the density of the graphite is more than 2.0 g/cm³, the probability of cracking in the diamond may be twice or more.

### (Characteristics of polycrystalline diamond)

The average crystal grain size of the polycrystalline diamond is preferably 10 to 1000 nm and more preferably 100 to 300 nm.

The polycrystalline diamond includes a plurality of diamond grains, and "the average crystal grain size of the polycrystalline diamond" refers to the average grain size of these diamond grains. The average crystal grain size of the polycrystalline diamond can be measured by precisely polishing a specimen surface, then, using, for example, an electronic microscope such as JSM-7800F manufactured by JEOL Ltd., setting observation conditions under which grain boundaries are visible, acquiring a reflection electron microscopic image, and analyzing the image.

The average crystal grain size of the polycrystalline diamond can be controlled by, for example, adjusting the amount doped of the dissimilar element other than carbon such as at least one of nitrogen, boron, and phosphorus and the temperature in the vacuum chamber.

The polycrystalline diamond that is used as a material of the tip part of the measurement tool of the present embodiment preferably contains at least one of dispersed nitrogen, boron, and phosphorus. When the polycrystalline diamond contains at least one of nitrogen, boron, and phosphorus, it is possible to suppress the tip part being worn when the tool is used for measurement, processing, or the like.

In addition, when the polycrystalline diamond contains at least one of nitrogen, boron, and phosphorus, it is possible to impart a conductive property to the polycrystalline diamond, and it becomes possible to efficiently and highly accurately process the tip part in a case where the tip part is processed by a processing method using electricity such as electro-discharge machining.

The total concentration of at least one of nitrogen, boron, and phosphorus in the polycrystalline diamond is preferably 1 ppb to 5000 ppm and more preferably 10 to 4000 ppm. This concentration can be measured by SIMS (secondary ion mass spectrometry) analysis.

### (Shape of tip part of measurement tool)

The shape (overall shape) of the tip part of the measurement tool is not particularly limited and may be, for example, a spherical shape, a conical shape, or a pyramid shape. Here, the spherical shape does not necessarily need to be a truly spherical shape. In addition, the spherical shape also includes a sphere having a partial chip in a joint portion with the shank part or the like.

In a case where the tip part has a spherical shape, the diameter of the sphere (the length of the longest line segment connecting two points on the surface of the sphere) is, for example, 10 µm to 10 mm and preferably 100 to 1000 µm. The diameter of the sphere can be measured with, for example, a shape analysis laser microscope (confocal laser microscope).

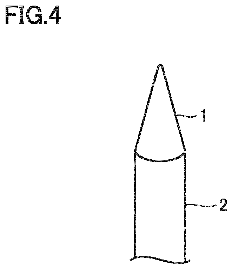

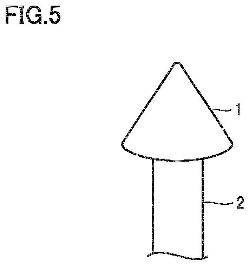

In a case where the tip part has a conical shape, a partial sphere may be combined to the tip side of the conical portion (that is, the tip of the conical portion may be rounded) with reference to FIGs. 4 and 5. In such a case, the diameter of the partial sphere is, for example, 2 to 100 µm. The diameter of the sphere can be measured by, for example, acquiring an electronic microscopic image from the side and analyzing the image.

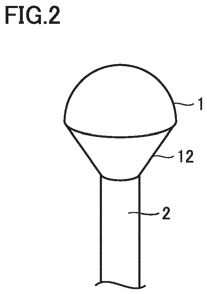

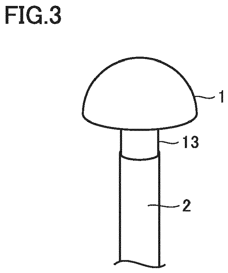

In addition, the tip part of the measurement tool of the present embodiment may have, for example, a shape of a modification example shown in FIG. 2 or may have a shape of another modification example shown in FIG. 3. That is, tip part 1 of the measurement tool of the present embodiment may have a spherical shape (hemispherical shape) in a part on the tip side and may have a chamfered part 12 or 13 having a shape in which the sphere is further removed in the other part. When the tip part of the measurement tool has the chamfered part, it is possible to improve measurement accuracy or the like at the time of performing measurement using the side surface of the tip part of the measurement tool. This is because, ordinarily, the sphericity decreases toward the side surface, and thus the side surface is likely to come into contact with an unnecessary and unintended portion other than a measurement part, and the chamfered part makes it possible to avoid such contact or expect a pressure reduction effect.

### <Method for manufacturing measurement tool>

An example of a method for manufacturing the measurement tool according to the present embodiment will be described below.

The method for manufacturing the measurement tool according to the present embodiment includes at least a step of processing the shape of the tip part of the measurement tool.

The shape of the tip part can be processed by, for example, processing using light such as beam processing (for example, laser beam processing, ion beam processing, or electron beam machining) or processing using electricity such as electro-discharge machining or plasma jet machining. Before and after this processing, polishing may be performed.

Before or after the step of processing the shape of the tip part, a step of processing the shape of the shank part (columnar body) may be performed. The shape of the shank part can be processed using a variety of well-known methods.

The material of the shank part may be the same material as or a different material from the material of the tip part, but is preferably the same material as the material of the tip part. This is because the strength of a joint part improves. The tip part and the shank part may be a single article or a combination of two separate members.

### [Example]

Hereinafter, the present disclosure will be described in more detail by showing an example, but the present disclosure is not limited to this example.

### <Example 1>

At least one of nitrogen, boron, and phosphorus is mixed into a raw material composition containing 50 vol% of sheet-like graphite having grain sizes of 50 nm or more and 50 vol% of glassy carbon. The raw material composition is held at a pressure of 12 GPa and a temperature of 2000°C for 20 hours, thereby obtaining nano-polycrystalline diamond containing no binder.

A portion other than a tip part of the obtained nano-polycrystalline diamond was processed to a cylindrical body (shank part) having a diameter of 1 mm and a length of 3 mm. The tip part is processed so as to be 1 mm in diameter and 1 mm in length.

Furthermore, the tip part is processed so as to become a spherical shape using beam processing. At this time, the tip part is processed to a spherical shape as a whole.

A measurement tool (stylus) having a spherical tip part and a columnar shank part as shown in FIG. 1 is manufactured as described above.

In the measurement tool having the tip part consisting of the polycrystalline diamond obtained in Example 1,
the average crystal grain size of the polycrystalline diamond was 200 nm.

The polycrystalline diamond contained at least one of nitrogen, boron, and phosphorus.

The Knoop hardness of the polycrystalline diamond was 50 GPa or more.

The embodiment disclosed this time shall be considered to be exemplary in all aspects and to limit nothing. The scope of the present disclosure is shown not by the above-described embodiment but by the claims and is intended to include equivalent meaning to the claims and all modifications within the scope.

### REFERENCE SIGNS LIST

1 Tip part, 2 Shank part

## Claims

1. A measurement tool comprising a tip part consisting of polycrystalline diamond,
wherein the polycrystalline diamond contains at least one of dispersed nitrogen, boron, and phosphorus,
the tool comprises a shank part, and
the tip part is provided at an end portion of the shank part.

2. The measurement tool according to claim 1, wherein the polycrystalline diamond has an average grain size of 10 to 1000 nm.

3. The measurement tool according to claim 1 or 2, wherein the polycrystalline diamond has a Knoop hardness of 50 GPa or more.
